# EUROPÄISCHE PATENTSCHRIFT

(11) **EP 0 965 057 B1**
(45) Veröffentlichungstag und Bekanntmachung des Hinweises auf die Patenterteilung: **07.11.2001**
(21) Anmeldenummer: 98910656.2
(22) Anmeldetag: 13.02.1998
(51) Int. Cl.: G01S 15/10, G01S 15/93

(54) **ULTRASCHALL-ABSTANDSMESSSYSTEM MIT IM ZEITMULTIPLEX ÜBERTRAGENEN DIGITALEN MESSSIGNALEN**
ULTRASOUND DISTANCE MEASURING SYSTEM WITH DIGITAL MEASURING SIGNALS TRANSMITTED BY TIME MULTIPLEXING
SYSTEME D'ECARTOMETRIE A ULTRASONS A SIGNAUX DE MESURE NUMERIQUES TRANSMIS PAR MULTIPLEXAGE TEMPOREL

(30) Priorität: 26.02.1997 DE 19707651
(43) Veröffentlichungstag der Anmeldung: 22.12.1999
(73) Patentinhaber: Valeo Schalter und Sensoren GmbH, 74321 Bietigheim-Bissingen (DE)
(72) Erfinder: HOFFSOMMER, Klaus, D-74321 Bietigheim (DE)
(74) Vertreter: Dreiss, Fuhlendorf, Steimle & Becker
(86) Internationale Anmeldenummer: EP9800807
(87) Internationale Veröffentlichungsnummer: WO9838529

(56) Entgegenhaltungen:
- EP-A- 0 419 399
- US-A- 4 512 000
- US-A- 4 674 073
- US-A- 4 967 860

## Beschreibung

Die Erfindung betrifft ein Abstandsmeßsystem, wie es insbesondere als Parkhilfesystem in Kraftfahrzeugen benutzt wird. Derartige Systeme zeigen beim Rangieren eines Fahrzeugs dem Fahrer das Vorhandensein eines Hindernisses an und geben einen Hinweis auf den Abstand dieses Hindernisses und dessen Lage gegenüber dem Kraftfahrzeug. Das Prinzip eines derartigen Abstandsmeßsystems ist beispielsweise in der DE-OS 35 40 704 beschrieben. Die Arbeitsweise eines derartigen Parkhilfesystems ist dabei im Prinzip wie folgt: Ein elektronisches Steuergerät ist mit bidirektionalen Datenleitungen mit einzelnen Ultraschallsensoren (ULS) verbunden, welche über den Umfang des Fahrzeugs verteilt sind. In Abhängigkeit einer in dem elektronischen Steuergerät (ECU) gespeicherten Reihenfolge werden die einzelnen Ultraschallsensoren angesteuert. Diese senden daraufhin einen impulsförmigen Wellenzug aus, der von etwa vorhandenen Hindernissen reflektiert wird. Bei den ausgesendeten Wellen handelt es sich um Schallwellen im Ultraschallbereich. Werden Schallwellen (durch ein Hindernis) reflektiert, so werden diese von dem nicht nur als Sender, sondern auch als Empfänger wirkenden Ultraschallsensor empfangen. Der Ultraschallsensor erzeugt nun Impulse auf der Datenleitung, die zeitlich mit den empfangenen Echos übereinstimmen, soweit deren Amplitude eine in dem Ultraschallsensor eingestellte Schwelle übersteigt. Hinsichtlich des Impulses kann der Pegel als digital insofern bezeichnet werden, als das Vorhandensein eines Impulses gleichzeitig eine Angabe darüber ist, daß er einen bestimmten Schwellwert übersteigt (Schwelle wird überschritten oder nicht überschritten). Dagegen gibt die zeitliche Lage des Impulses eine analoge Information an, nämlich den Abstand des Hindernisses von dem empfangenden Ultraschallsensor. Diese analoge Information resultiert aus dem Laufzeitverhalten des Ultraschallimpulses. Das Echo kommt also umso später bei dem empfangenden Sensor an, je weiter das Hindernis entfernt ist. Das elektronische Steuergerät (ECU) errechnet aus der zwischen dem Sendevorgang bis zum Erscheinen der reflektierten Welle unter Berücksichtigung der Schallgeschwindigkeit den Hindernisabstand.

Üblicherweise bestehen die heutigen Parkhilfesysteme aus einem elektronischen Steuergerät und wie weiter oben schon erläutert, mehreren Ultraschallsensoren. Jeder Ultraschallsensor (ULS) besitzt eine eigene Datenleitung, da zur Verbesserung der Auswertung die Echoinformation von mehreren Ultraschallsensoren zu einem bestimmten Zeitpunkt benötigt wird. So lassen beispielsweise durch das Auswerten mehrerer ULS aufgrund einer gesendeten Schallwelle genauere Rückschlüsse auf Lage und Abstand des Hindernisses zu. Es ist auch bereits vorgeschlagen worden, die Schwelle, deren Überschreiten die Aussendung eines Impulses auf der Datenleitung auslöst, innerhalb des Ultraschallsensors anzuordnen. Es ist auch möglich, innerhalb des Ultraschallsensors die Schwelle zu ändern, so daß beispielsweise von einem Ultraschallsensor mehrere Impulse nacheinander ausgesendet werden können, die mit sich ändernder Schwelle bewertet werden. Faktisch bedeutet dies, daß die einzelnen Echos mit unterschiedlicher Empfindlichkeit empfangen werden. Auch läßt sich die Empfindlichkeit eines Sensors über die Empfangszeit eines Impulsechos ändern, so daß bestimmte fest vorgegebene Hindernisse wie beispielsweise Anhängerkupplung, überstehendes Gepäck und ähnliches, ausgeblendet werden können. Entsprechendes gilt auch für in bestimmtem Abstand auftretende Reflexionen durch die Fahrbahn selbst. Das elektronische Steuergerät (ECU) erhält jedoch aufgrund der digitalen Datenleitung zu jedem Zeitpunkt nur die Information, ob die Amplitudenhöhe die jeweilige Schwelle übertrifft oder darunter bleibt. Wie beispielsweise auch in der DE-OS 35 13 270 beschrieben, erfolgen im zeitlichen Ablauf eines einem einzigen Ultraschallsensor zugeordneten Meßzyklus drei Zustände aufeinander. Das ECU erzeugt einen kurzen Sendeimpuls (< 1 ms). Dann übermittelt der empfangende Ultraschallsensor die Information zu dem ECU (ca. 10 ms). Schließlich ist eine "Erholzeit" vorgesehen, in der störende Echos und Reflexionen abklingen können (ca. 10 ms). Die Erfindung geht daher aus von einem Abstandsmeßsystem der sich aus dem Oberbegriff des Anspruchs 1 ergebenden Gattung. Aufgabe der Erfindung ist es, die Informationsdichte auf der Datenleitung zu erhöhen, um so die Anzahl der Datenleitungen zwischen den Sensoren und dem ECU herabsetzen zu können oder eine verbesserte Abstandsmessung zu ermöglichen. Die Erfindung wird durch die sich aus dem kennzeichnenden Teil des Anspruchs 1 ergebende Merkmalskombination gelöst. Die Erfindung besteht im Prinzip also darin, statt eines Auswertungsergebnisses über eine Datenleitung mehrere Ergebnisse im Zeitmultiplex zu senden. Die Mehrzahl von Ergebnissen kann aus der mehrfachen Auswertung eines Echos durch einen oder mehrere Sensoren stammen. Die von den Sensoren gemessenen Echoinformationen werden somit zwischengespeichert und zeitlich gerafft der ECU übermittelt. Die Erfindung ermöglicht in Weiterbildung die vorteilhafte Ausgestaltung nach Anspruch 2. Dabei werden anstatt die einzelnen Sensoren sternförmig mit dem ECU zu verbinden, diese seriell an die Datenleitung angeschaltet, wobei die einzelnen ULS im zeitlichen Multiplex auf der gemeinsamen Datenleitung zum ECU hin senden können. Eine entsprechende Nutzung dieser Datenleitung in umgekehrter Richtung zu den ULS, um diese beispielsweise zum Senden eines Schallimpulses anzuregen, kann ebenfalls vorgesehen werden und ist in diesem Zusammenhang sehr vorteilhaft.

Da nunmehr die zeitliche Lage eines von dem ECU zu empfangenden Impulses nur noch bedingt eine Auskunft über die Laufzeit des Echos gibt, empfiehlt sich in vorteilhafter Weiterbildung der Erfindung die Verwendung der Merkmalskombination nach Anspruch 3. Danach wird zusätzlich zu der digitalen Information des Impulses, daß dieser oberhalb der eingestellten Schwelle liegt, noch eine weitere digitale Information mit diesem Impuls verknüpft, welche eine Information über die Laufzeit des Echos beinhaltet. Die Laufzeit des gesendeten Impulses vom Aussendezeitpunkt bis zum Empfangszeitpunkt ist dabei immer doppelt so groß wie die Laufzeit des reflektierten Echos.

Es ist möglich, mit jedem Zyklus einen Startimpuls mit zu dem ECU zu übertragen, wobei der Abstand Folgeimpulse zu Startimpuls der Laufzeit des entsprechenden Echos entspricht. Dabei wird in einem empfangenden Sensor das Echo gleichzeitig mit mehreren Schwellen (also mehrfach) ausgewertet. Die Ergebnisse werden während eines Zyklus ggf. mit den Ergebnissen weiterer Sensoren zu dem ECU zeitversetzt. Durch die Erfindung ergeben sich eine Vielzahl von Vorteilen. Durch die geraffte zeitversetzte Übermittlung der Informationen können auf der gemeinsamen Datenleitung zusätzliche Informationen übertragen werden. So kann das System beispielsweise insofern erweitert werden, als die auf den Empfang eines einzigen Echos beruhende Information mehrfach übertragen wird, um die Störanfälligkeit auf der gemeinsamen Datenleitung zu verringern. Für die Verringerung der Störanfälligkeit kann die gleiche Information aber auch unterschiedlich codiert werden, indem beispielsweise zwei Übertragungen der gleichen, auf demselben Echo beruhenden Information mit vertauschtem Pegel, wobei die Pegelvertauschung bei auf der zweiten Übertragung geschieht.

Eine weitere Möglichkeit besteht darin, daß das gleiche Echo mehrfach ausgewertet wird, indem unterschiedliche Filter, d.h. unterschiedliche Schwellen auf den gleichen Echowert angewendet werden. Somit stehen dem ECU mehrere Informationen zur Hinderniserkennung zur Verfügung. So kann beispielsweise ein niedriger Schwellwert für weitgehend aus der Mittelachse der Sendekeule zurückgestrahlte Echos erfolgen. Es können aber auch mit niedrigerer Schwelle Echos ausgewertet werden, die etwa im Winkel zu der Hauptstrahlungsrichtung zurückgeworfen werden. Bekanntlich ist die Aussendung im Winkel zur Hauptrichtung weniger energiereich, so daß auch entsprechend schwächere Echos ankommen. Die Energieverteilung des Sendepegels wird üblicherweise als räumliche Sendekeule dargestellt. Auf diese Weise läßt sich in mehreren Schritten aufgrund der Analyse der empfangenen Signale mit unterschiedlicher Schwelle eine Information darüber gewinnen, ob die empfangenen Impulse aus der Hauptsenderichtung oder aus einer hierzu geneigten Richtung kommen. Dabei läßt sich beispielsweise die Strategie verfolgen, daß die aus der Hauptsenderichtung empfangenen Echos bei einer zweiten Auswertung der empfangenen Echos ausgeblendet werden, so daß bei gleichem Abstand zuerst die stärkeren in der Hauptsenderichtung stehenden Hindernisse und danach die seitlich davon stehenden Hindernisse im vergleichbaren Abstand durch einen einzigen Sensor festgestellt werden können. Entsprechende Möglichkeiten, die auch zur zusätzlichen Sicherung des festgestellten Ergebnisses dienen, lassen sich durch die Kombination mehrerer sendender Sensoren erreichen, deren Echos gleichzeitig und ggf. mehrfach ausgewertet werden. Die Erfindung ist also auch dann von großem Vorteil, wenn nicht mehrere Sensoren auf einer gleichen Informationsleitung senden, sondern auch schon dann, wenn zwischen jedem Sensor und dem ECU eine eigene Datenleitung besteht, aber durch die zeitliche Verdichtung mehr Informationen über diese Leitung zwischen dem betreffenden Sensor und dem ECU ausgetauscht werden können. Schließlich besteht als großer Vorteil der Erfindung die Möglichkeit, wie weiter oben schon erläutert, mehrere Sensoren über eine einzige Datenleitung mit dem ECU zu verbinden. Hierdurch ergibt sich ein Bus-System, wobei jedem Sensor ein Zeitfenster zugeteilt wird, in dem seine Informationen dem ECU übermittelt werden.

Wie weiter oben schon erläutert ist es besonders vorteilhaft, durch eine sechsfache zeitliche Raffung während eines Zyklus sechs Informationen zu übertragen. Durch die Kombination der genannten Möglichkeiten läßt sich beispielsweise ein System entwerfen, bei dem zwei Sensoren an einer gemeinsamen Datenleitung liegen und jeweils jede der beiden Sensoren Echodaten aus drei verschiedenen Schwellen des gleichen Echos übermittelt. Ein Ausführungsbeispiel der Erfindung wird nachfolgend anhand der Zeichnung erläutert. Darin zeigt:
- Fig. 1: den Verlauf eines gesendeten Impulses und der empfangenen Impulse bei niedrig eingestellter Schwelle
- Fig. 2: den Verlauf eines gesendeten Impulses und den resultierenden Echoimpuls bei hoch eingestellter Schwelle und
- Fig. 3: bei dem erfindungsgemäßen System den Verlauf des Sendeimpulses und die zweimalige Auswertung der Empfangsimpulse bei schrittweise gesenkter Schwelle.

Ein wichtiges Merkmal der Erfindung kann auch darin bestehen, daß auch ohne zeitliche Raffung eine zweimalige Auswertung des auf einen einzigen Sendeimpuls beruhenden Empfangsimpulses dadurch zu ermöglichen, daß während der weiter oben beschriebenen dritten Phase (Erholungsphase) das Ergebnis der zweiten Auswertung in der bisher üblichen Weise übertragen wird. Es wird somit die Erholungsphase zur Informationsübertragung auch in der bekannten Form genutzt.

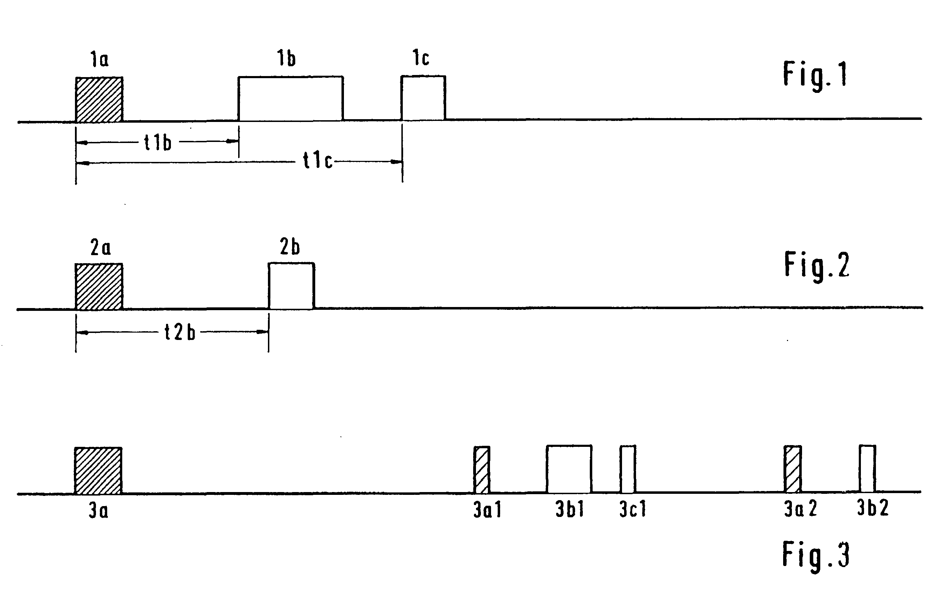

Fig. 1 zeigt einen Sendeimpuls 1a, der durch eine Ultraschallwelle gebildet ist. Dieser Impulszug wird in Form von zwei Echos 1b und 1c reflektiert. Dabei läßt sich aus der Dauer der Laufzeit t1b und t1c entnehmen, daß das die Reflexion 1b bedingende Hindernis näher liegt als das zu 1c gehörende Hindernis, wobei das Hindernis zu 1b ausgedehnter ist als das zu lc. Das sich aus Fig. 1 ergebende Verfahren ist konventionell. Fig. 2 zeigt einen Sendeimpuls 2a, wobei in dem empfangenden Sensor, der gleichzeitig auch der sendende Sensor sein kann, die Schwelle gegenüber Fig. 1 heraufgesetzt ist. Das Echo 2b liegt wegen der höheren Schwelle in Fig. 2 also nur kürzere Zeit oberhalb der Schwelle. Hinsichtlich des Hindernisses 1c in Fig. 1 ist die Schwelle so groß, daß dieses Echo überhaupt nicht registriert wird, sondern durch die Schwelle unterdrückt wird. Durch die Erfindung ist es möglich, das sich aus den Fig. 1 und 2 ergebende Verfahren der Auswertung des Echos mit unterschiedlicher Schwelle auf den gleichen Sendeimpuls 3a zweifach anzuwenden. Dabei geben die gleichzeitigen Auswertungen des Empfangsimpulses mit unterschiedlicher Schwelle einmal zwei Empfangsimpulse 3b und 3c und einmal nur den dann verkürzten Empfangsimpuls 3b. Die so gewonnenen Ergebnisse werden in dem betreffenden Sensor gespeichert und im zeitlichen Nacheinander über die Datenleitung an das ECU-Gerät übermittelt. Da nunmehr die Angabe der Laufzeit aufgrund des zeitlichen Abstandes (z.B. T1b) des Empfangsimpulses (siehe 1b) als Hinweis für den Abstand des Hindernisses nicht mehr zur Verfügung steht, wird gemäß Fig. 3 noch eine zusätzliche Information mittels der Startimpulse 3a1 und 3a2 übertragen. Durch den Abstand zwischen dem Starimpuls 3a1 bzw. 3a2 und den nachfolgenden Impulsen läßt sich ein Hinweis auf die Laufzeit zwischen dem Sendeimpuls (3a1) und den Empfangsimpulsen (3b1 bzw. 3c1) gewinnen. Insofern sind auch die Abstände zwischen dem Impulsen 3a1 bzw. 3a2 gegenüber den Impulsen 3b1, 3c1 bzw. 3b2 ein analoges Maß für den Hindernisabstand. Die Laufzeiten können aber auch in anderer Form digital verschlüsselt gemeinsam über die Datenleitung übertragen werden.

## Patentansprüche

1. Abstandsmeßsystem, bei dem Ultraschallwellen von einem Ultraschallwellensender ausgesandt, die reflektierten Ultraschallwellen zu Empfangssignalen ausgewertet und die abgegebenen Empfangssignale von einem elektronischen Steuergerät (ECU) ausgewertet werden, **dadurch gekennzeichnet, daß** mehrere Sensorsignale in digitaler Form im Sensor gespeichert und die Sensorsignale von einem oder mehreren Sensoren zeitlich versetzt in digitaler Form über eine digitale Datenleitung zum elektronischen Steuergerät (ECU) übermittelt werden.

2. Abstandsmeßsystem nach Anspruch 1, **dadurch gekennzeichnet, daß** mehrere Sensoren örtlich seriell an eine gemessene Datenleitung angeschlossen sind.

3. Abstandsmeßsystem nach Anspruch 1 oder 2, **dadurch gekennzeichnet, daß** die aus dem Speicher abgegebenen Signale mit einer Information codiert sind, welche eine Angabe über den zeitlichen Abstand des Empfangszeitpunktes von dem Sendezeitpunkt der Welle angibt.

4. Abstandsmeßeinrichtung nach einem der vorangegangenen Ansprüche, **dadurch gekennzeichnet, daß** die Signale von sechs Sensoren zeitlich hintereinander über die Datenleitung übertragen werden.

5. Abstandsmeßsystem nach einem der vorangegangenen Ansprüche, **dadurch gekennzeichnet, daß** in dem Sensor die empfangene reflektierte Ultraschallwelle gleichzeitig mit unterschiedlichen Schwellen ausgewertet und die Auswertungsergebnisse zeitlich versetzt auf der gleichen Datenleitung zum elektronischen Steuergerät (ECU) übertragen werden.

6. Abstandsmeßsystem nach einem der vorangegangenen Ansprüche, **dadurch gekennzeichnet, daß** mehrere Sensoren über die gleiche Datenleitung mit dem elektronischen Steuergerät verbunden sind und in jedem der Sensoren das gleiche Echo ausgewertet wird und daß die ggf. mehrfachen Auswertungsergebnisse der einzelnen Sensoren zeitlich versetzt und vorzugsweise zeitlich verdichtet über die gemeinsame Datenleitung zu dem elektronischen Steuergerät übertragen werden.

## Claims

1. Range measurement system, with which ultrasonic waves are emitted by an ultrasonic wave transmitter, the reflected ultrasonic waves are evaluated to received signals and the conveyed received signals evaluated by an electronic control unit (ECU), **characterized in that** several sensor signals are stored in digital form in the sensor and the sensor signals of one or more sensors chronologically staggered, are transmitted to the electronic control unit (ECU) in digital form over a digital data line.

2. Range measurement system of Claim 1, **characterized in that** several sensors are connected locally, in a serial manner, to a measured data line.

3. Range measurement system of Claim 1 or 2, **characterized in that** signals conveyed from the memory are coded with information about the time distance the instant of reception from the instant of transmission of the wave.

4. Range measurement device of one of the preceding claims, **characterized in that** signals from six sensors are transmitted in chronological succession by means of the data line.

5. Range measurement system of one of the preceding claims, **characterized in that** in the sensor, a received reflected ultrasonic wave is evaluated simultaneously with different thresholds and the evaluation results are transmitted, in a chronologically staggered way, on the same data line to the electronic control unit (ECU).

6. Range measurement system of one of the preceding claims, **characterized in that** several sensors are connected to the electronic control unit by means of the same data line and in each of the sensors, the same echo is evaluated and, **in that** the multiple evaluation results of the individual sensors are chronologically staggered, if necessary, and, preferably, time compressed, and transmitted to the electronic control unit by means of a common data line.

## Revendications

1. Système de mesure de distance dans lequel des ondes d'ultrasons sont émises par un émetteur d'ondes d'ultrasons, les ondes d'ultrasons réfléchies sont exploitées en tant que signaux de réception et les signaux de réception délivrés sont exploités par un appareil de commande électronique (ECU), **caractérisé en ce que** plusieurs signaux de capteur sont mémorisés dans le capteur sous forme numérique, et les signaux d'un ou de plusieurs capteurs sont transmis, décalés dans le temps, sous forme numérique par une ligne de données numériques, à l'appareil de commande électronique (ECU).

2. Système de mesure de distance selon la revendication 1, **caractérisé en ce que** plusieurs capteurs sont connectés localement en série à une ligne de données mesurée.

3. Système de mesure de distance selon la revendication 1 ou 2, **caractérisé en ce que** les signaux fournis par la mémoire sont codés avec une information qui donne une indication concernant l'intervalle de temps entre l'instant de réception et l'instant d'émission de l'onde.

4. Dispositif de mesure de distance selon l'une des revendications précédentes, **caractérisé en ce que** les signaux de six capteurs sont transmis l'un après l'autre dans le temps, par la ligne de données.

5. Système de mesure de distance selon l'une des revendications précédentes, **caractérisé en ce que** l'onde d'ultrasons réfléchie et reçue, est évaluée en même temps dans le capteur avec différents seuils, et les résultats de l'évaluation sont transmis, décalés dans le temps, par la même ligne de données, à l'appareil de commande électronique (ECU).

6. Système de mesure de distance selon l'une des revendications précédentes, **caractérisé en ce que** plusieurs capteurs sont reliés à l'appareil de commande électronique, par la même ligne de données, et dans chacun des capteurs est exploité le même écho, et **en ce que** les résultats de l'évaluation, éventuellement multiple des différents capteurs sont transmis, décalés dans le temps, et de préférence compactés dans le temps, à l'appareil de commande électronique, par la ligne de données commune.
